# EUROPEAN PATENT SPECIFICATION

(11) **EP 2 610 954 B1**
(45) Date of publication and mention of the grant of the patent: **15.08.2018**
(21) Application number: 11790845.9
(22) Date of filing: 17.08.2011
(51) Int. Cl.: H01M 10/04, H01M 2/30, H01M 2/02, H01M 10/0525, H01M 2/26, H01M 10/052, H01M 10/0587

(54) **IMPROVED JELLY-ROLL STRUCTURE, AND SECONDARY BATTERY HAVING SAME**
ELEKTRODENWICKLUNG VON VERBESSERTER STRUKTUR UND BATTERIE DAMIT
STRUCTURE DE ROULEAU DE GEL AMÉLIORÉE ET BATTERIE SECONDAIRE LA COMPRENANT

(30) Priority: 23.08.2010 KR 20100081251
(43) Date of publication of application: 03.07.2013
(73) Proprietor: LG Chem, Ltd., Youngdungpo-gu Seoul 150-721 (KR)
(72) Inventor: LEE, Jin Soo, Daejeon 305-330 (KR); LEE, Kil Young, Daejeon 305-729 (KR); KIM, Jin, Daejeon 302-280 (KR); AHN, Soonho, Seoul 137-907 (KR); SUNG, Joo Hwan, Daejeon 302-120 (KR)
(74) Representative: Hoffmann Eitle
(86) International application number: PCT/KR2011/006049
(87) International publication number: WO 2012/026705

(56) References cited:
- EP-A1- 2 136 429
- EP-A2- 2 466 666
- WO-A1-2008/018207
- WO-A1-2010/003979
- JP-A- 2005 209 530
- KR-A- 20070 096 649
- KR-A- 20080 095 465
- KR-A- 20100 002 695
- KR-A- 20100 071 941

## Description

### [TECHNICAL FIELD]

The present invention relates to a jelly-roll of an improved structure, and, more particularly, to a jelly-roll type electrode assembly ("jelly-roll") configured by winding a cathode having a cathode active material coated portion formed at at least one side of a cathode current collector and an anode having an anode active material coated portion formed at at least one side of an anode current collector in a state in which the cathode and the anode are opposite to each other via a separator, wherein a cathode tab mounted at an uncoated portion of the cathode so that the cathode tab is inclined upward at a predetermined angle to a longitudinal direction of the cathode and an anode tab mounted at an uncoated portion of the anode so that the anode tab is inclined upward at a predetermined angle to a longitudinal direction of the anode are located adjacent to each other to minimize a magnetic field generated by cathode current and anode current during discharge, and the cathode tab and the anode tab are located at the outside end of the jelly-roll after wound, and a secondary battery including the same.

### [BACKGROUND ART]

As mobile devices have been increasingly developed, and the demand for such mobile devices has increased, the demand for secondary batteries as an energy source has also sharply increased. Among such secondary batteries is a lithium secondary battery exhibiting high energy density and discharge voltage, on which much research has been carried out and which is now commercially and widely used.

Based on the shape of a battery case, a secondary battery may be classified as a cylindrical battery having an electrode assembly mounted in a cylindrical metal container, a prismatic battery having an electrode assembly mounted in a prismatic metal container, or a pouch-shaped battery having an electrode assembly mounted in a pouch-shaped case made of an aluminum laminate sheet.

Also, an electrode assembly mounted in a battery case is a power generating element, having a cathode/separator/anode stack structure, which can be charged and discharged. The electrode assembly may be classified as a jelly-roll type electrode assembly configured to have a structure in which a long-sheet type cathode and a long-sheet type anode, to which active materials are applied, are wound in a state in which a separator is disposed between the cathode and the anode or a stack type electrode assembly configured to have a structure in which pluralities of cathodes and anodes each having a predetermined size are consecutively stacked in a state in which separators are disposed respectively between the cathodes and the anodes. The jelly-roll type electrode assembly has advantages in that the jelly-roll type electrode assembly is easy to manufacture and exhibits high energy density per weight.

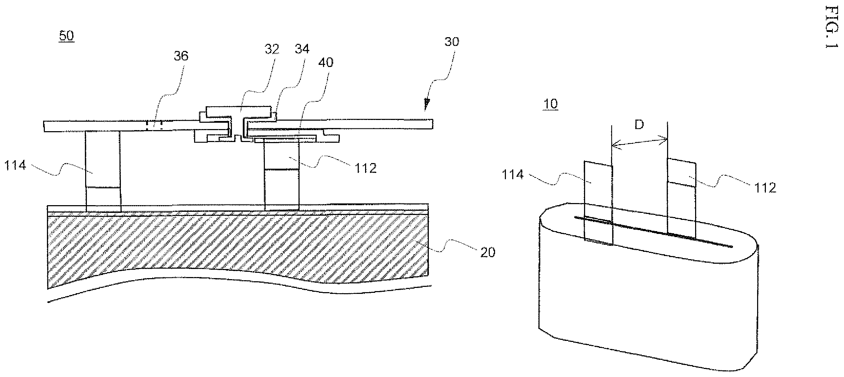

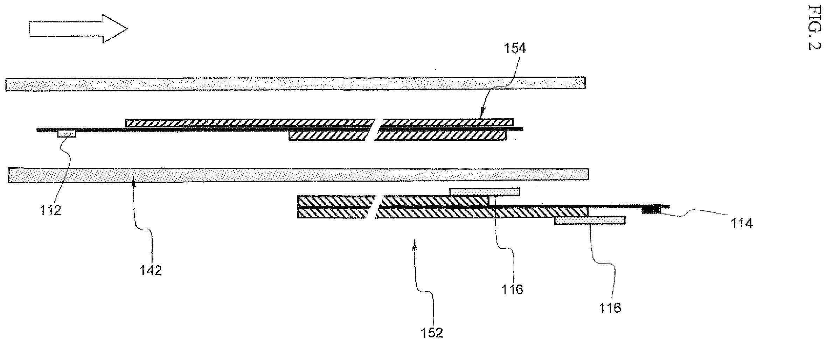

The jelly-roll type electrode assembly is mainly used in a cylindrical battery or a prismatic battery. FIG. 1 is a partial typical view showing a conventional prismatic battery having a jelly-roll type electrode assembly mounted therein, and FIG. 2 is a partial horizontal sectional typical view of the jelly-roll type electrode assembly shown in FIG. 1 before wound.

Referring to these drawings, a prismatic battery 50 is configured to have a structure in which a jelly-roll type electrode assembly 10 is mounted in a prismatic metal case 20, and a top cap 30, at which a protruding electrode terminal (for example, an anode terminal) 32 is formed, is coupled to the open top of the case 20.

An anode of the electrode assembly 10 is electrically connected to the lower end of the anode terminal 32 on the top cap 30 via an anode tab 112. The anode terminal 32 is insulated from the top cap 30 by an insulation member 34. On the other hand, a cathode tab 114 of another electrode (for example, a cathode) of the electrode assembly 10 is electrically connected to the top cap 30, which is made of a conductive material, such as aluminum or stainless steel, to form a cathode terminal.

Also, in order to ensure electrical insulation between the electrode assembly 10 and the top cap 30 except the electrode tabs 112 and 114, a sheet type insulation member 40 is disposed between the prismatic case 20 and the electrode assembly 10, the top cap 30 is mounted to the case 20, and the top cap 30 and the case 20 are coupled to each other by welding. Subsequently, an electrolyte is injected into the case 20 through an electrolyte injection port 36, the electrolyte injection port 36 is sealed by welding, and epoxy is applied to the welded portion. As a result, a battery is completed.

Meanwhile, in the prismatic battery with the above-stated construction, the anode tab 112 is located at the inside end of the electrode assembly 10 after wound, and the cathode tab 114 is located at the outside end of the electrode assembly 10 after wound. The distance D' between the cathode tab 114 and the anode tab 112 is approximately 10 to 11 mm. However, the inventors of the present application have found that a large amount of magnetic field is generated by cathode current and anode current during discharge of the electrode assembly 10 with the above-stated construction.

For this reason, a radio signal is disturbed by a magnetic field in a device having a secondary battery including such a jelly-roll type electrode assembly 10 mounted therein, particularly a GSM mobile phone having large current capacity. Such disturbance of a radio signal makes it difficult for a mobile phone user to make telephone conversation, for example, when the mobile phone user wears a hearing aid.

Consequently, there is high necessity for technology that is capable of fundamentally solving the aforementioned problems.

JP 2005 209 530 A relates to a non-aqueous electrolyte secondary battery. The non-aqueous electrolyte secondary battery is provided with an electrode group formed into flat shape by winding a positive electrode and a negative electrode through a separator; a positive electrode tab protruded from the spiral face of the electrode groups, electrically connected to the positive electrode; a negative electrode tab protruded from the spiral face of the electrode groups, electrically connected to the negative electrode. The non-aqueous electrolyte contains 2, 4-difluoroanisole, and the shortest distance between the positive electrode tab and the negative electrode tab is made to a range of 6 to 18 mm.

EP 2 466 666 A2, which is prior art pursuant to Art. 54(3) EPC, relates to a battery. The battery comprises a case, an electrode assembly within the case, wherein the electrode assembly includes a positive electrode and a negative electrode, and positive and negative conductors electrically connected to the positive and negative electrodes, respectively, at a substantially similar point on the respective electrode assembly such that the current flows in opposite directions through the positive and negative electrodes. The positive and negative conductors are closely routed so as to be aligned and in close proximity.

### [DISCLOSURE]

### [TECHNICAL PROBLEM]

Therefore, the present invention has been made to solve the above problems, and other technical problems that have yet to be resolved.

The inventors of the present application have found that, when a cathode tab mounted at an uncoated portion of a cathode and an anode tab mounted at an uncoated portion of an anode are placed so as to be adjacent to each other, it is possible to minimize a magnetic field generated by cathode current and anode current during discharge. The present invention has been completed based on these findings.

### [TECHNICAL SOLUTION]

In accordance with one aspect of the present invention, the above and other objects can be accomplished by the provision of a jelly-roll type electrode assembly ("jelly-roll") as defined in claim 1 below. The jelly-roll is configured by winding a cathode having a cathode active material coated portion formed at at least one side of a cathode current collector and an anode having
an anode active material coated portion formed at at least one side of an anode current collector in a state in which the cathode and the anode are opposite to each other via a separator, wherein a cathode tab mounted at an uncoated portion of the cathode so that the cathode tab is inclined upward at a predetermined angle to a longitudinal direction of the cathode and an anode tab mounted at an uncoated portion of the anode so that the anode tab is inclined upward at a predetermined angle to a longitudinal direction of the anode are located so as to be adjacent to each other to minimize a magnetic field generated by cathode current and anode current during discharge, and the cathode tab and the anode tab are located at the outside end of the jelly-roll after wound, wherein a distance between the cathode tab and the anode tab, specifically the distance between neighboring edges of the cathode tab and the anode tab, is (the width of the anode tab + the width of the cathode tab) x 130%, and wherein the separator is located at the uncoated portion of the anode and the separator extends to be longer than the end portion of the anode.

As a result of a variety of extensive and intensive studies and experiments to solve the problems as described above, the inventors of the present application have found that a magnetic field is almost offset during electrical conduction since the cathode and the anode are opposite to each other in a state in which the separator is disposed between the cathode and the anode, whereas a magnetic field generated from the entire electrode assembly substantially depends upon the positions of the electrode tabs since current from the electrode sheets is concentrated on the electrode tabs to generate a strong magnetic field although the electrode tabs are smaller than the electrode sheets.

In the jelly-roll according to the present invention, therefore, the cathode tab mounted at the uncoated portion of the cathode sheet and the anode tab mounted at the uncoated portion of the anode sheet are located so as to be adjacent to each other while the cathode tab and the anode tab are located at the outside end of the jelly-roll after wound. Consequently, magnetic field components generated in opposite directions by the cathode current and the anode current during discharge are offset by the structure in which the cathode tab and the anode tab are adjacent to each other, thereby minimizing generation of a magnetic field as compared with a conventional jelly-roll configured to have a structure in which the cathode tab and the anode tab are distant from each other.

In accordance with another aspect of the present invention, there is provided a jelly-roll type electrode assembly ("jelly-roll") as defined in claim 2. The jelly-roll is configured by winding a cathode having a cathode active material coated portion formed at at least one side of a cathode current collector and an anode having an anode active material coated portion formed at at least one side of an anode current collector in a state in which the cathode and the anode are opposite to each other via a separator, wherein a cathode tab mounted at an uncoated portion of the cathode so that the cathode tab is inclined upward at a predetermined angle to a longitudinal direction of the cathode and an anode tab mounted at an uncoated portion of the anode so that the anode tab is inclined upward at a predetermined angle to a longitudinal direction of the anode are located so as to be adjacent to each other to minimize a magnetic field generated by cathode current and anode current during discharge, and the cathode tab and the anode tab are located at the inside end of the jelly-roll after wound, wherein a distance between the cathode tab and the anode tab, specifically the distance between neighboring edges of the cathode tab and the anode tab, is (the width of the anode tab + the width of the cathode tab) x 130%, and wherein the separator is located at the uncoated portion of the anode and the separator extends to be longer than the end portion of the anode.

In the jelly-roll according to the present invention, therefore, the cathode tab mounted at the uncoated portion of the cathode sheet and the anode tab mounted at the uncoated portion of the anode sheet are located so as to be adjacent to each other while the cathode tab and the anode tab are located at the inside end of the jelly-roll after wound. Consequently, magnetic field components generated in opposite directions by the cathode current and the anode current during discharge are offset by the structure in which the cathode tab and the anode tab are adjacent to each other, thereby minimizing generation of a magnetic field as compared with a conventional jelly-roll configured to have a structure in which the cathode tab and the anode tab are distant from each other.

In the present invention, reduction of distance between the cathode tab and the anode tab maximizes an electric field offset effect. In order to optimize such an electric field offset effect, the distance between the cathode tab and the anode tab, specifically the distance between neighboring edges of the cathode tab and the anode tab, is (the width of the anode tab + the width of the cathode tab) x 130%.

Also, the distance between the cathode tab and the anode tab may be decided in the leftward-and-rightward direction or in the frontward-and-rearward direction.

Also, the present invention provides a jelly-roll configured to have a structure in which an insulation tape is attached to a boundary portion of the cathode active material coated portion at a position where the cathode active material uncoated portion and the anode active material coated portion face each other, thereby securing electrical insulation and improving safety.

In a preferred example, the jelly-roll may be configured to have a structure in which a winding start portion of the cathode has cathode active material coated portions formed at the upper and lower sides of the cathode current collector and thus does not have a cathode uncoated portion, and a winding end portion of the cathode is provided with a cathode uncoated portion at which the cathode tab is mounted and to have a structure in which an insulative tape is provided at a boundary surface of the cathode active material coated portion located at the winding end portion of the cathode so that the boundary surface is opposite to the anode.

In another preferred example, the jelly-roll may be configured to have a structure in which a winding start portion of the cathode has cathode active material
coated portions formed at the upper and lower sides of the cathode current collector and thus does not have a cathode uncoated portion, and a winding end portion of the cathode is provided with a cathode uncoated portion at which the cathode tab is mounted and to have a structure in which a cathode active material coated portion is further formed at at least one side of the rear end of the cathode uncoated portion, and an insulative tape is provided at a boundary surface of the cathode active material coated portion located at the winding end portion of the cathode so that the boundary surface is opposite to the anode.

According to circumstances, the jelly-roll may be configured to have a structure in which a winding start portion and a winding end portion of the cathode have cathode uncoated portions, the cathode tab is mounted at the inside cathode uncoated portion of the winding start portion, and an insulative tape is provided at the rear end of the cathode uncoated portion at which the cathode tab is mounted and to have a structure in which an insulative tape is provided at a boundary surface of the cathode active material coated portion located at the winding end portion of the cathode so that the boundary surface is opposite to the anode.

In another example, , the jelly-roll may be configured to have a structure in which a winding start portion and a winding end portion of the cathode have cathode uncoated portions, the cathode tab is mounted at the inside cathode uncoated portion of the winding start portion, and an insulative tape is provided at the rear end of the cathode uncoated portion at which the cathode tab is mounted and to have a structure in which insulative tapes are provided at a region at which the uncoated portion of the boundary surface of the cathode coated portion and the anode active material coated portion are brought into contact with each other via a separator and a region at which the anode tab and the cathode tab are brought into contact with electrode current collectors having different polarities via the separator, to thereby accomplish double insulation together with the separator.

Meanwhile, the material for the insulation tape is not particularly restricted so long as the insulation tape exhibits an excellent insulation property. Preferably, the insulation tape is made of a material which is not thermally shrinkable at a temperature of up to 200 °C. If the insulation tape is made of a material which can be somewhat shrunk by heat, on the other hand, it is possible to solve problem caused at the separator disposed between the electrodes.

The insulation tape may be at least one selected from a group consisting of a polyimide tape, an acetate tape, a glass cloth tape, a polyester tape, a polyphenylene sulfide (PPS) tape and a polypropylene tape. In particular, the insulation tape is preferably made of polyethyleneterepthalate film.

Also, the thickness of the insulation tape is preferably 10 to 100 *µ*m.

In accordance with another aspect of the present invention, there is provided a secondary battery including the jelly-roll with the above-stated construction.

Preferably, the secondary battery is a prismatic or pouch-shaped battery having a jelly-roll mounted in a prismatic or pouch-shaped battery case. A prismatic battery may be manufactured as follows. A jelly-roll is formed in a state in which a cathode tab and an anode tab are disposed so as to be adjacent to each other, the jelly-roll is placed in a prismatic battery case, a top cap having a protruding anode terminal is coupled to the open top of the battery case, and an electrolyte is injected into the battery case through an electrolyte injection port formed at the top cap.

Meanwhile, the predetermined angle may be preferably 30 to 90 degrees, more preferably 90 degrees.

### [ADVANTAGEOUS EFFECTS]

As is apparent from the above description, the jelly-roll according to the present invention is configured to have a structure in which a cathode tab mounted at an uncoated portion of a cathode and an anode tab mounted at an uncoated portion of an anode are placed so as to be adjacent to each other, thereby minimizing a magnetic field generated by cathode current and anode current during discharge.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a partial typical view showing a conventional prismatic battery having a jelly-roll type electrode assembly mounted therein;
FIG. 2 is a partial horizontal sectional typical view of the jelly-roll type electrode assembly shown in FIG. 1 before wound;
FIG. 3 is a partial typical view showing a prismatic battery having a jelly-roll type electrode assembly according to an embodiment of the present invention mounted therein;
FIG. 4 is a partial horizontal sectional typical view of the jelly-roll type electrode assembly shown in FIG. 3 before wound;
FIG. 5 is a partial typical view showing a prismatic battery having a jelly-roll type electrode assembly according to another embodiment of the present invention mounted therein;
FIG. 6 is a partial horizontal sectional typical view of the jelly-roll type electrode assembly shown in FIG. 5 before wound;
FIGS. 7 to 9 are partial horizontal sectional typical views of various examples of the jelly-roll type electrode assembly shown in FIG. 3 before wound;
FIG. 10 is a partial horizontal sectional typical view of an example of the jelly-roll type electrode assembly shown in FIG. 5 before wound;
FIG. 11 is a typical view showing a process of winding the jelly-roll type electrode assembly shown in FIG. 3;
FIG. 12 is a typical view showing a process of winding the jelly-roll type electrode assembly shown in FIG. 5;
FIG. 13 is an enlarged horizontal sectional typical view of the jelly-roll type electrode assembly shown in FIG. 5;
FIG. 14 is a typical view showing a method of testing a batteries according to Examples 1 and 2 and a battery according to Comparative example 1; and
FIG. 15 is a typical view showing a process of winding the jelly-roll type electrode assembly shown in FIG. 1.

### [BEST MODE]

Now, preferred embodiments of the present invention will be described in detail with reference to the accompanying drawings. It should be noted, however, that the scope of the present invention is not limited by the illustrated embodiments.

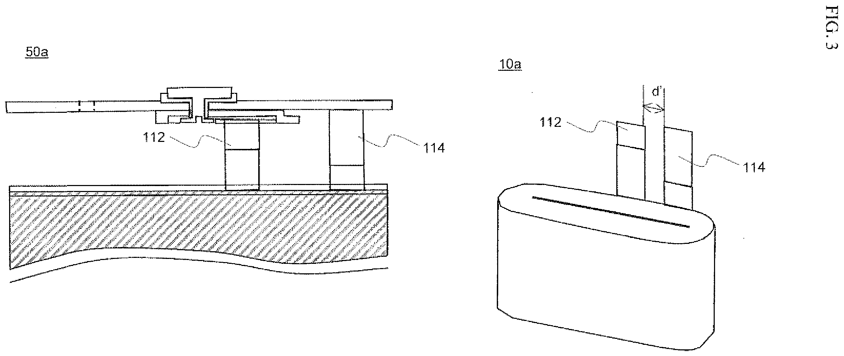

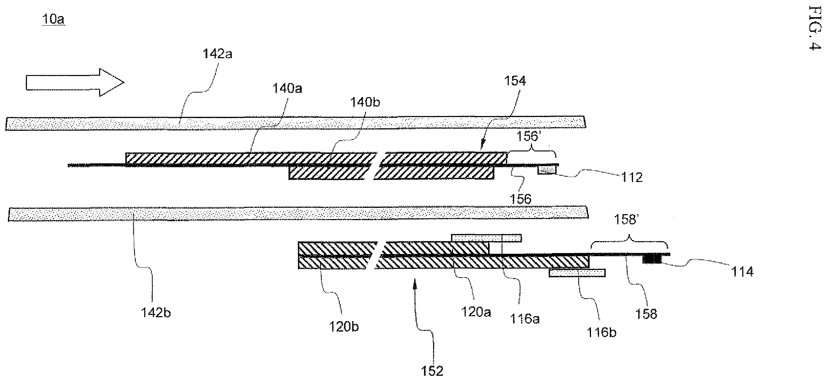

FIG. 3 is a partial typical view showing a prismatic battery having a jelly-roll type electrode assembly according to an embodiment of the present invention mounted therein, and FIG. 4 is a partial horizontal sectional typical view of the jelly-roll type electrode assembly shown in FIG. 3 before wound.

Referring to these drawings, a jelly-roll 10a is configured to have a structure in which a cathode 152 having a cathode active material coated portion formed at each side of a cathode current collector 158 and an anode 154 having an anode active material coated portion formed at each side of an anode current collector 156 are wound in a state in which the cathode 152 and the anode 154 are opposite to each other via separators 142a and 142b.

Also, a cathode tab 114 mounted at an uncoated portion 158' of the cathode 152 perpendicularly to a longitudinal direction of the cathode and an anode tab 112 mounted at an uncoated portion 156' of the anode 154 perpendicularly to a longitudinal direction of the anode are located so as to be adjacent to each other to minimize a magnetic field generated by cathode current and anode current during discharge.

The cathode tab 114 and the anode tab 112 are located at the outside end of the jelly-roll 10a after wound. The distance d' between the cathode tab 114 and the anode tab 112, specifically the distance between neighboring edges of the cathode tab 114 and the anode tab 112, is (the width of the anode tab + the width of the cathode tab) x 130%, which is approximately 5 mm.

The cathode 152 has cathode active material coated portions 120a and 120b formed at the upper and lower sides of the cathode current collector 158. At at least one end of the cathode current collector 158, preferably at a winding end portion of the cathode current collector 158, is formed a cathode active material uncoated portion, i.e. a cathode uncoated portion 158', which is located at the wound end so that the cathode tab 114 is mounted at the cathode uncoated portion 158'. At the other end of the cathode current collector 158, at which the cathode tab 114 is not mounted, however, a cathode active material uncoated portion, i.e. a cathode uncoated portion, is not formed at at least one side of the cathode current collector 158.

That is, when the anode 154 and the cathode uncoated portion 158' come into contact with each other, short circuit current is increased and the amount of heat emitted is increased, whereby the safety of the jelly-roll is greatly deteriorated. Such deterioration in safety of the jelly-roll is prevented by not providing the cathode uncoated portion 158'. Such a structure of the cathode may be achieved by 2-step cutting including cutting the cathode active material uncoated portion and then cutting the cathode active material coated portion or by block cutting.

The anode has anode active material coated portions 140a and 140b formed at at least one side of the anode current collector 156. At a winding start portion and/or a winding end portion of the anode current collector 156 is formed an anode uncoated portion 156', to which the anode tab 112 for external terminal connection is connected.

Also, the separators 142a and 142b extend to be longer than the end portion of the anode to isolate the anode even when the separators are shrank by heat.

In addition, the anode active material coated portions 140a and 140b, formed at the upper and lower sides of the anode current collector 156, are brought into contact with the cathode active material coated portions 120a and 120b via the separators 142a and 142b. The cathode, brought into contact with the anode active material coated portions 140a and 140b, has the cathode active material coated portions 120a and 120b at the opposite sides of the cathode current collector but does not have the cathode active material uncoated portion, i.e. the cathode uncoated portion, thereby preventing the occurrence of a short circuit between the cathode and the anode.

Also, the anode active material coated portion 140a formed at the upper side of the anode current collector 156 at the winding end portion of the anode current collector 156 is brought into contact with a boundary surface of the cathode active material coated portion formed at the lower side of the cathode current collector, at which the cathode tab 114 is mounted, via the separator 142a. An insulative tape 116b is attached to the boundary surface of the cathode active material coated portion to prevent the occurrence of a short circuit between the cathode uncoated portion 158', at which the cathode active material is not coated, and the anode active material coated portion 140a.

On the other hand, the anode active material coated portion 140b formed at the lower side of the anode current collector 156 at the winding end portion of the anode current collector 156 is brought into contact with a boundary surface of the cathode active material coated portion formed at the upper side of the cathode current collector, at which the cathode tab 114 is mounted, via the separator 142b. In the present invention, an insulative tape 116a is attached to the boundary surface of the cathode active material coated portion to prevent contact with the cathode uncoated portion, at which the cathode active material is not coated, of the cathode current collector.

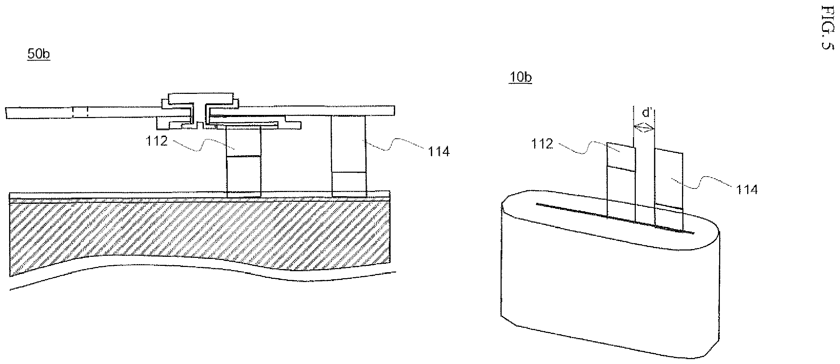

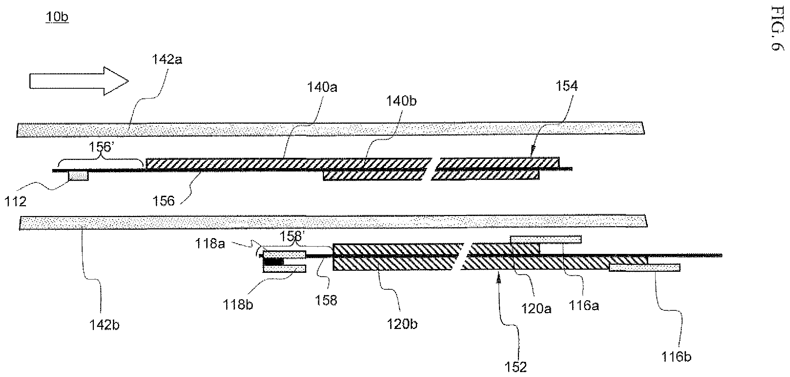

FIG. 5 is a partial typical view showing a prismatic battery having a jelly-roll type electrode assembly according to another embodiment of the present invention mounted therein, and FIG. 6 is a partial horizontal sectional typical view of the jelly-roll type electrode assembly shown in FIG. 5 before wound.

Referring to these drawings, a jelly-roll 10b is configured to have a structure in which a cathode tab 114 mounted at an uncoated portion 158' of a cathode 152 and an anode tab 112 mounted at an uncoated portion 156' of an anode 154 are located so as to be adjacent to each other at the inside end of the jelly-roll 10b after wound to minimize a magnetic field generated by cathode current and anode current during discharge.

Also, in the same manner as in the jelly-roll 10a of FIG. 3, the distance between the cathode tab 114 and the anode tab 112 is approximately 5 mm, and insulative tapes 116a and 116b are attached to the upper and lower sides of the cathode 152 adjacent to the wound end of the anode 154.

The cathode tab 114 is attached to the lower side of the uncoated portion 158' of the cathode 152, and insulative tapes 118a and 118b are attached to the lower side of the cathode tab 114 and the upper side of the uncoated portion 158'. Consequently, it is possible to prevent contact between the cathode tab 114 and the anode 154 even when the jelly-roll 10b is deformed by external force.

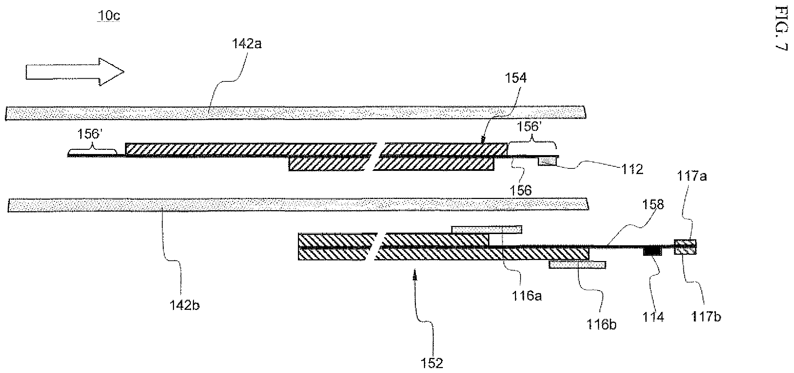

FIGS. 7 to 9 are partial horizontal sectional typical views of various examples of the jelly-roll type electrode assembly shown in FIG. 3 before wound.

First, a jelly-roll 10c of FIG. 7 further includes cathode active material coated portions 117a and 117b formed at the upper and lower sides of the rear end of the cathode uncoated portion at which the cathode tab is mounted, as compared with the structure of the jelly-roll 10a of FIG. 4.

Also, in the same manner as in the structure of the jelly-roll 10a of FIG. 4, the cathode does not have a cathode uncoated portion at the winding start portion thereof, and the cathode active material coated portions 117a and 117b, formed at the upper and lower sides of the rear end of the cathode uncoated portion at which the cathode tab 114 is mounted, do not have additional insulative tapes.

The separators 142a and 142b extend at least 5 mm from the end portion of the anode to isolate an anode active material exposed portion even when the separators are shrank by heat.

Also, several separators are located at opposite sides of an anode uncoated portion 156' cut part of the winding start portion to improve safety against burr of the cut part. The opposite sides of the anode uncoated portion cut part of the winding start portion are opposite to the cathode via one separator each, but the insulative tapes 116a and 116b are located at the boundary surfaces of the cathode active material coated portions, thereby improve safety against burr.

In the jelly-roll 10c of FIG. 7, the insulative tapes are attached to the boundary surfaces 116a and 116b of the cathode active material coated portions at the upper and lower sides of the cathode current collector at the cathode end portion, in the same manner as in the structure of the jelly-roll 10a of FIG. 4, thereby preventing the occurrence of a short circuit due to opposition between the cathode active material uncoated portion and the anode active material coated portion.

Preferably, the insulative tapes 116a and 116b are preferably attached to the boundary surfaces of the cathode active material coated portions during an electrode winding process or a large-width electrode manufacturing process.

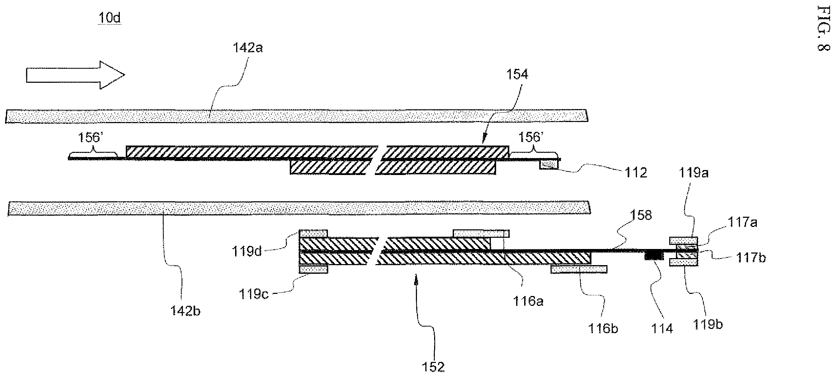

A jelly-roll lOd of FIG. 8 further includes insulative tapes, as compared with the structure of the jelly-roll 10c of FIG. 7. Specifically, insulative tapes are attached to boundary surfaces 119c and 119d of the cathode active material coated portions at the upper and lower sides of the cathode current collector at the cathode start portion, boundary surfaces 116a and 116b of the cathode active material coated portions at the upper and lower sides of the cathode current collector at the cathode active material end portion, and boundary surfaces 119a and 119b at the upper and lower sides of additional cathode active material coated portions 117a and 117b formed at the rear end of the cathode uncoated portion at the cathode end portion, thereby preventing the occurrence of a short circuit due to opposition between the cathode active material uncoated portion and the anode active material coated portion.

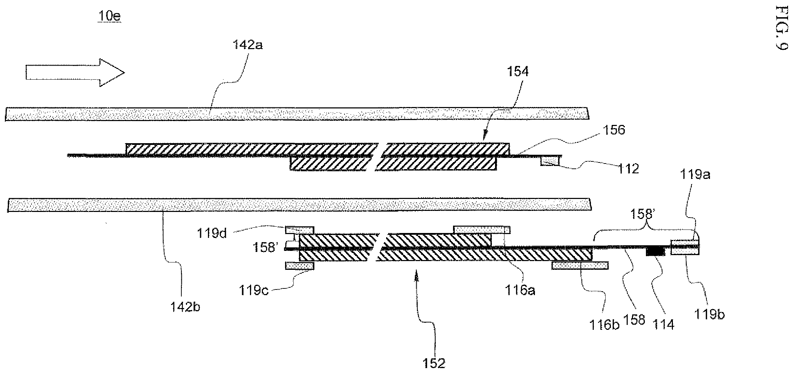

A jelly-roll 10e of FIG. 9 includes a cathode uncoated portion 158' having no cathode active material coated portion, at each rear end of the cathode current collector 158. Consequently, cathode active material coated portions are formed at the upper and lower sides of the cathode current collector from a position spaced a predetermined distance from the winding start portion of the cathode. The winding start portion of the cathode is brought into contact with the anode active material coated portion via a separator during winding.

Also, the jelly-roll 10e of FIG. 9 is configured to have a structure in which insulative tapes 119a and 119b are further attached to the upper and lower sides of the boundary surfaces of the cathode active material coated portions from the front end of the cathode to prevent the occurrence of a short circuit due to opposition between the cathode uncoated portion and the anode active material coated portion.

In addition, insulative tapes are attached to the boundary surfaces 116a and 116b of the cathode active material coated portions at the upper and lower sides of the cathode current collector at the cathode active material end portion and the upper and lower sides 119a and 119b of the cathode uncoated portion at the rear end of the cathode current collector at which the cathode tab is located, thereby preventing the occurrence of a short circuit due to opposition between the cathode active material uncoated portion and the anode active material coated portion.

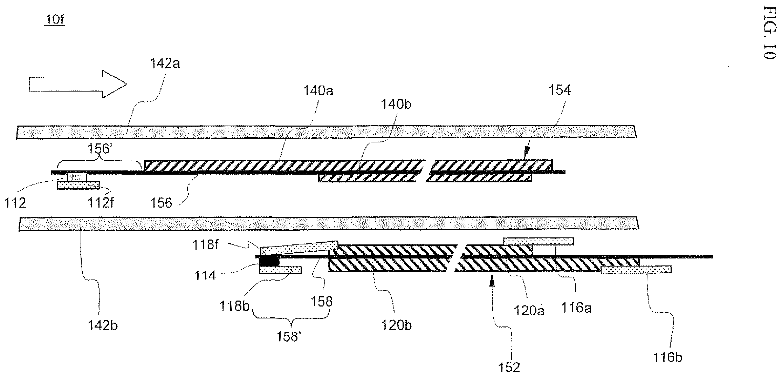

FIG. 10 is a partial horizontal sectional typical view of an example of the jelly-roll type electrode assembly shown in FIG. 5 before wound.

Referring to FIG. 10, a jelly-roll 10f is configured to have a structure in which a winding start portion and a winding end portion of a cathode have cathode uncoated portions 158', a cathode tab 114 is mounted at the inside cathode uncoated portion 158' at the winding start portion, and an insulative tape 118b is attached to the rear end of the cathode uncoated portion at which the cathode tab 114 is mounted.

Also, insulative tapes 118a and 112f are attached to a region at which the uncoated portion 158' of the boundary surface of the cathode coated portion and an anode active material coated portion 140b are brought into contact with each other via a separator 142b and a region at which an anode tab 112 and the cathode tab 114 are brought into contact with electrode current collectors having different polarities.

Consequently, the jelly-roll 10f of FIG. 10 provides double insulation together with the separator 142b.

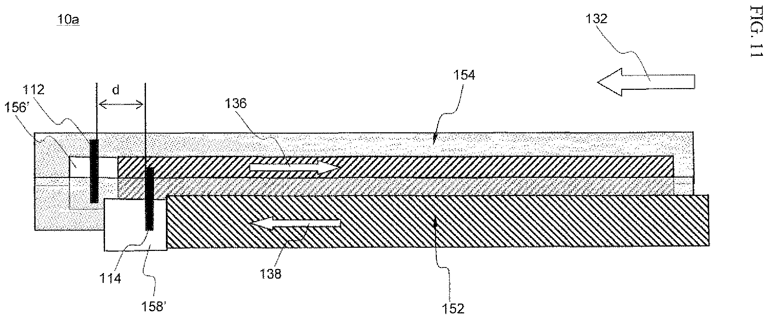

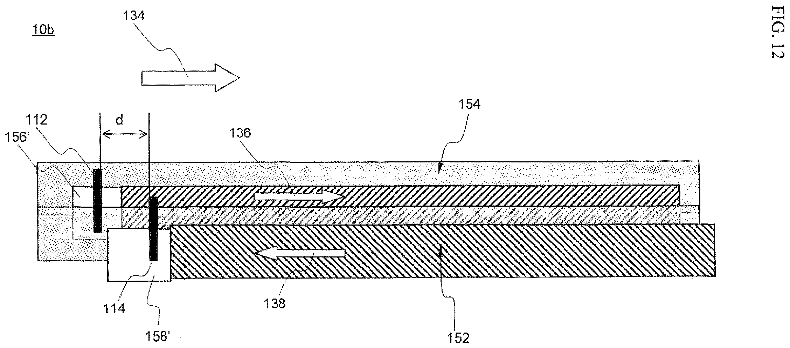

FIG. 11 is a typical view showing a process of winding the jelly-roll type electrode assembly shown in FIG. 3, and FIG. 12 is a typical view showing a process of winding the jelly-roll type electrode assembly shown in FIG. 5.

Referring to FIG. 11 together with FIG. 3, the jelly-roll 10a of FIG. 3 is manufactured by attaching an anode tab 112 and a cathode tab 114 perpendicularly to uncoated portions 156' and 158', to which an electrode active material is not applied, at the left ends of an anode 154 and a cathode 152, and winding the anode 154 and the cathode 152 from the right ends to the left ends of the anode 154 and the cathode 152 (in a direction indicated by an arrow 132). The cathode tab 114 and the anode tab 112 are located at the outside end of the jelly-roll 10a after wound.

During discharge, therefore, anode current flows in a rightward direction 136 and cathode current flows in a leftward direction 138. The anode tab 112 and the cathode tab 114 are located so as to be adjacent to each other while being spaced a distance d of 5.5 mm from each other with the result that the anode current and the cathode current acting in opposite directions are offset.

Referring now to FIG. 12 together with FIG. 5, the jelly-roll 10b of FIG. 5 is manufactured by attaching a cathode tab 114 and an anode tab 112 to uncoated portions 156' and 158', to which an electrode active material is not applied, at the left ends of a cathode 152 and an anode 154, and winding the anode 154 and the cathode 152 from the left ends to the right ends of the anode 154 and the cathode 152 (in a direction indicated by an arrow 134). The cathode tab 114 and the anode tab 112 are located at the inside end of the jelly-roll 10b after wound.

In the same manner as in FIG. 11, therefore, anode current flows in a rightward direction 136 and cathode current flows in a leftward direction 138 during discharge. The anode tab 112 and the cathode tab 114 are located so as to be adjacent to each other while being spaced a distance d of 5.5 mm from each other with the result that the anode current and the cathode current acting in opposite directions are offset.

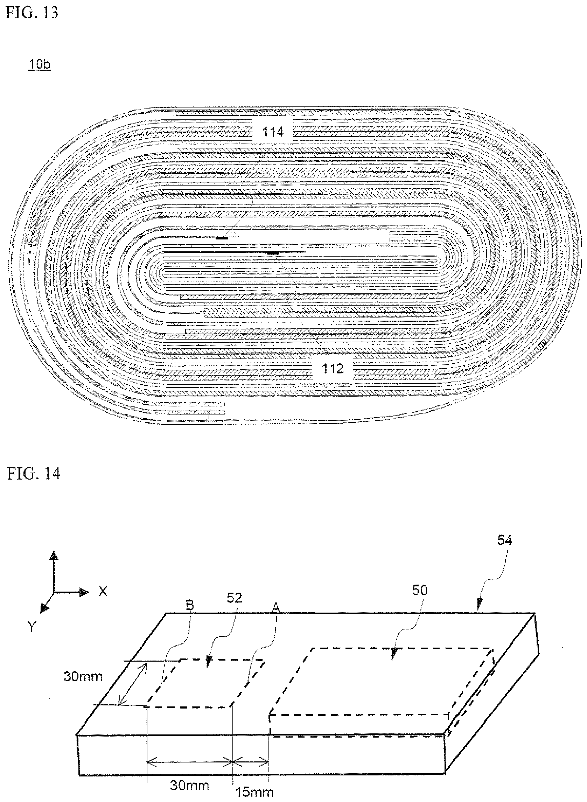

FIG. 13 is an enlarged horizontal sectional typical view of the jelly-roll type electrode assembly shown in FIG. 5.

Referring to FIG. 13, the jelly-roll 10b is formed by winding the cathode, the separator, the anode and the separator. The cathode tab 114, mounted at the uncoated portion of the cathode, and the anode tab 112, mounted at the uncoated portion of the anode, are located so as to be adjacent to the inside end of the jelly-roll 10a after wound. The insulative tapes are omitted from FIG. 13 for clarity of the drawing.

Hereinafter, experiments carried out with respect to examples will be described so as to reveal the effects of the present invention.

### [Example 1]

### 1-1 Manufacture of cathode

A cathode active material containing LiCoO₂ was applied to an aluminum current collector, and then a cathode tab was attached to the end of the current collector, such that the cathode tab protruded upward, by spot welding, to manufacture a cathode.

### 1-2 Manufacture of anode

An anode active material containing artificial graphite was applied to a copper current collector, and then an anode tab was attached to the end of the current collector, such that the anode tab protruded upward, by spot welding, to manufacture an anode.

### 1-3 Manufacture of battery

In a state in which the cathode tab and the anode tab were placed so as to be adjacent to each other as shown in FIG. 11, the cathode manufactured as described in Section 1-1 and the anode manufactured as described in Section 1-2 were wound into a roll from the right ends to the left ends of the cathode and the anode and then compressed while a separator was disposed between the cathode and the anode to manufacture a prismatic jelly-roll configured to have a structure in which the cathode tab and the anode tab are located at the outside end of the jelly-roll after wound. Subsequently, the prismatic jelly-roll was placed in an aluminum prismatic case, and an EC-EMC blending-based solution as an electrolyte was impregnated to manufacture a battery.

### [Example 2]

A battery was manufactured in the same manner as in Example 1 except that, in a state in which a cathode tab and an anode tab were placed so as to be adjacent to each other as shown in FIG. 12, a cathode manufactured as described in Section 1-1 and an anode manufactured as described in Section 1-2 were wound into a roll from the left ends to the right ends of the cathode and the anode and then compressed while a separator was disposed between the cathode and the anode to manufacture a prismatic jelly-roll configured to have a structure in which the cathode tab and the anode tab were located at the inside end of the jelly-roll after wound.

### [Comparative Example 1]

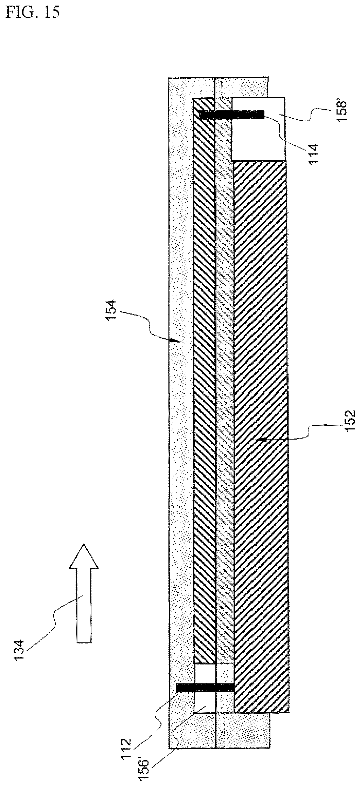

A battery was manufactured in the same manner as in Example 1 except that, in a state in which a cathode tab and an anode tab were placed in opposite directions as shown in FIG. 15, a cathode manufactured as described in Section 1-1 and an anode manufactured as described in Section 1-2 were wound into a roll from the left ends to the right ends of the cathode and the anode and then compressed while a separator was disposed between the cathode and the anode to manufacture a prismatic jelly-roll configured to have a structure in which the anode tab was located at the inside end of the jelly-roll after wound, and the cathode tab was located at the outside end of the jelly-roll after wound.

### [Experimental Example 1]

Ten batteries manufactured according to Examples 1 and 2 and Comparative example 1 were prepared, and noise of a magnetic field was measured at positions A and B distant from the batteries as shown in FIG. 14. Averages of the measured values are indicated in Table 1 below.

**<Table 1>**

| | X-axis (dB) | | Y-axis (dB) | |
|---|---|---|---|---|
| | Position A | Position B | Position A | Position B |
| Comparative Example 1 | -12 | -22 | -22 | -40 |
| Example 1 | -38 | -46 | -40 | -42 |
| Example 2 | -37 | -46 | -40 | -42 |

At a range between position A and position B at which a radio receiver of a GSM type mobile phone 54, in which a battery 50 was mounted, was located, much more noise was reduced in the batteries of Examples 1 and 2 than the batteries of Comparative example 1. Consequently, it can be seen that a magnetic field was minimized.

Also, it can be seen that such reduction of noise greatly improves radio receive sensitivity in mobile phones each having a battery mounted therein and is particularly efficient in GSM type mobile phones, in which a large amount of magnetic field is generated.

Although the preferred embodiments of the present invention have been disclosed for illustrative purposes, those skilled in the art will appreciate that various modifications, additions and substitutions are possible, within the scope of the appended claims.

## Claims

1. A jelly-roll type electrode assembly ("jelly-roll") configured by winding a cathode having a cathode active material coated portion formed at at least one side of a cathode current collector and an anode having an anode active material coated portion formed at at least one side of an anode current collector in a state in which the cathode and the anode are opposite to each other via a separator, wherein
a cathode tab mounted at an uncoated portion of the cathode so that the cathode tab is inclined upward at a predetermined angle to a longitudinal direction of the cathode and an anode tab mounted at an uncoated portion of the anode so that the anode tab is inclined upward at a predetermined angle to a longitudinal direction of the anode are located so as to be adjacent to each other to minimize a magnetic field generated by cathode current and anode current during discharge, and
the cathode tab and the anode tab are located at the outside end of the jelly-roll after wound, wherein a distance between the cathode tab and the anode tab, specifically the distance between neighboring edges of the cathode tab and the anode tab, is (the width of the anode tab + the width of the cathode tab) x 130%, and wherein the separator is located at the uncoated portion of the anode and the separator extends to be longer than the end portion of the anode.

2. A jelly-roll type electrode assembly ("jelly-roll") configured by winding a cathode having a cathode active material coated portion formed at at least one side of a cathode current collector and an anode having an anode active material coated portion formed at at least one side of an anode current collector in a state in which the cathode and the anode are opposite to each other via a separator, wherein
a cathode tab mounted at an uncoated portion of the cathode so that the cathode tab is inclined upward at a predetermined angle to a longitudinal direction of the cathode and an anode tab mounted at an uncoated portion of the anode so that the anode tab is inclined upward at a predetermined angle to a longitudinal direction of the anode are located so as to be adjacent to each other to minimize a magnetic field generated by cathode current and anode current during discharge, and
the cathode tab and the anode tab are located at the inside end of the jelly-roll after wound, wherein a distance between the cathode tab and the anode tab, specifically the distance between neighboring edges of the cathode tab and the anode tab, is (the width of the anode tab + the width of the cathode tab) x 130%, and wherein the separator is located at the uncoated portion of the anode and the separator extends to be longer than the end portion of the anode.

3. The jelly-roll according to claim 1, wherein
a winding start portion of the cathode has cathode active material coated portions formed at the upper and lower sides of the cathode current collector and thus does not have a cathode uncoated portion, and a winding end portion of the cathode is provided with a cathode uncoated portion at which the cathode tab is mounted, and wherein
an insulative tape is provided at a boundary surface of the cathode active material coated portion located at the winding end portion of the cathode so that the boundary surface is opposite to the anode.

4. The jelly-roll according to claim 1, wherein
a winding start portion of the cathode has cathode active material coated portions formed at the upper and lower sides of the cathode current collector and thus does not have a cathode uncoated portion, and a winding end portion of the cathode is provided with a cathode uncoated portion at which the cathode tab is mounted, and wherein
a cathode active material coated portion is further formed at at least one side of the rear end of the cathode uncoated portion, and an insulative tape is provided at a boundary surface of the cathode active material coated portion located at the winding end portion of the cathode so that the boundary surface is opposite to the anode.

5. The jelly-roll according to claim 2, wherein
a winding start portion and a winding end portion of the cathode have cathode uncoated portions, the cathode tab is mounted at the inside cathode uncoated portion of the winding start portion, and an insulative tape is provided at the rear end of the cathode uncoated portion at which the cathode tab is mounted, and wherein
an insulative tape is provided at a boundary surface of the cathode active material coated portion located at the winding end portion of the cathode so that the boundary surface is opposite to the anode.

6. The jelly-roll according to claim 2, wherein
a winding start portion and a winding end portion of the cathode have cathode uncoated portions, the cathode tab is mounted at the inside cathode uncoated portion of the winding start portion, and an insulative tape is provided at the rear end of the cathode uncoated portion at which the cathode tab is mounted, and wherein
insulative tapes are provided at a region at which the uncoated portion of the boundary surface of the cathode coated portion and the anode active material coated portion are brought into contact with each other via a separator and a region at which the anode tab and the cathode tab are brought into contact with electrode current collectors having different polarities via the separator, to thereby accomplish double insulation together with the separator.

7. A secondary battery comprising the jelly-roll according to claim 1 or 2.

8. The secondary battery according to claim 7, wherein the jelly-roll is mounted in a prismatic or pouch-shaped battery case.

9. The secondary battery according to claim 7, wherein the predetermined angle is 30 to 90 degrees.

## Patentansprüche

1. Gewickelte Elektrodenanordnung ("Wicklung"), welche durch Wickeln einer Kathode mit einem Bereich mit kathodenaktiver Materialbeschichtung, welcher an zumindest einer Seite eines Kathodenstromkollektors gebildet wird, und einer Anode mit einem Bereich mit anodenaktiver Materialbeschichtung, welcher an zumindest einer Seite eines Anodenstromkollektors gebildet wird, in einem Zustand konfiguriert ist, in welchem die Kathode und die Anode einander über einen Separator gegenüberliegen, wobei
eine Kathodenlasche, welche an einem unbeschichteten Bereich der Kathode montiert ist, sodass die Kathodenlasche in einem vorbestimmten Winkel zu einer Längsrichtung der Kathode aufwärts geneigt ist, und eine Anodenlasche, welche an einem unbeschichteten Bereich der Anode montiert ist, sodass die Anodenlasche in einem vorbestimmten Winkel zu einer Längsrichtung der Anode aufwärts geneigt ist, angeordnet sind, damit sie benachbart zueinander sind, um ein Magnetfeld zu minimieren, welches durch Kathodenstrom und Anodenstrom während Entladung erzeugt wird, und
die Kathodenlasche und die Anodenlasche nach dem Wickeln am äußeren Ende der Wicklung angeordnet sind, wobei eine Distanz zwischen der Kathodenlasche und der Anodenlasche, insbesondere die Distanz zwischen benachbarten Kanten der Kathodenlasche und der Anodenlasche gleich (die Breite der Anodenlasche + die Breite der Kathodenlasche) x 130 % ist, und wobei der Separator im unbeschichteten Bereich der Anode angeordnet ist und der Separator sich länger als der Endbereich der Anode erstreckt.

2. Gewickelte Elektrodenanordnung ("Wicklung"), welche durch Wickeln einer Kathode mit einem Bereich mit kathodenaktiver Material beschichtung, welcher an zumindest einer Seite eines Kathodenstromkollektors gebildet wird, und einer Anode mit einem Bereich mit anodenaktiver Materialbeschichtung, welcher an zumindest einer Seite eines Anodenstromkollektors gebildet wird, in einem Zustand konfiguriert ist, in welchem die Kathode und die Anode einander über einen Separator gegenüberliegen, wobei
eine Kathodenlasche, welche an einem unbeschichteten Bereich der Kathode montiert ist, sodass die Kathodenlasche in einem vorbestimmten Winkel zu einer Längsrichtung der Kathode aufwärts geneigt ist, und eine Anodenlasche, welche an einem unbeschichteten Bereich der Anode montiert ist, sodass die Anodenlasche in einem vorbestimmten Winkel zu einer Längsrichtung der Anode aufwärts geneigt ist, angeordnet sind, damit sie benachbart zueinander sind, um ein Magnetfeld zu minimieren, welches durch Kathodenstrom und Anodenstrom während Entladung erzeugt wird, und
die Kathodenlasche und die Anodenlasche nach dem Wickeln am inneren Ende der Wicklung angeordnet sind, wobei eine Distanz zwischen der Kathodenlasche und der Anodenlasche, insbesondere die Distanz zwischen benachbarten Kanten der Kathodenlasche und der Anode gleich (die Breite der Anodenlasche + die Breite der Kathodenlasche) x 130% ist, und wobei der Separator im unbeschichteten Bereich der Anode angeordnet ist und der Separator sich länger als der Endbereich der Anode erstreckt.

3. Wicklung nach Anspruch 1, wobei
ein Wicklungsstartbereich der Kathode Bereiche mit kathodenaktiver Materialbeschichtung aufweist, welche an den oberen und unteren Seiten des Kathodenstromkollektors gebildet sind und somit keinen unbeschichteten Kathodenbereich aufweist, und ein Wicklungsendbereich der Kathode mit einem unbeschichteten Kathodenbereich bereitgestellt ist, an welchem die Kathodenlasche montiert ist, und wobei
ein Isolierband an einer Grenzfläche des Bereichs mit kathodenaktiver Materialbeschichtung, welcher am Wicklungsendbereich der Kathode angeordnet ist, bereitgestellt ist, sodass sich die Grenzfläche gegenüber der Anode befindet.

4. Wicklung nach Anspruch 1, wobei
ein Wicklungsstartbereich der Kathode Bereiche mit kathodenaktiver Materialbeschichtung aufweist, welche an den oberen und unteren Seiten des Kathodenstromkollektors gebildet sind und somit keinen unbeschichteten Kathodenbereich aufweist, und ein Wicklungsendbereich der Kathode mit einem unbeschichteten Kathodenbereich bereitgestellt ist, an welchem die Kathodenlasche montiert ist, und wobei
ein Bereich mit kathodenaktiver Materialbeschichtung weiter an zumindest einer Seite des hinteren Endes des unbeschichteten Kathodenbereichs gebildet ist, und ein Isolierband an einer Grenzfläche des Bereichs mit kathodenaktiver Materialbeschichtung, welcher am Wicklungsendbereich der Kathode angeordnet ist, bereitgestellt ist, sodass sich die Grenzfläche gegenüber der Anode befindet.

5. Wicklung nach Anspruch 2, wobei
ein Wicklungsstartbereich und ein Wicklungsendbereich der Kathode unbeschichtete Kathodenbereiche aufweisen, die Kathodenlasche am inneren unbeschichteten Kathodenbereich des Wicklungsstartbereichs montiert ist, und ein Isolierband am hinteren Ende des unbeschichteten Kathodenbereichs, an welchem die Kathodenlasche montiert ist, bereitgestellt ist, und wobei
ein Isolierband an einer Grenzfläche des Bereichs mit kathodenaktiver Materialbeschichtung, welcher am Wicklungsendbereich der Kathode angeordnet ist, bereitgestellt ist, sodass sich die Grenzfläche gegenüber der Anode befindet.

6. Wicklung nach Anspruch 2, wobei
ein Wicklungsstartbereich und ein Wicklungsendbereich der Kathode unbeschichtete Kathodenbereiche aufweisen, die Kathodenlasche am inneren unbeschichteten Kathodenbereich des Wicklungsstartbereichs montiert ist, und ein Isolierband am hinteren Ende des unbeschichteten Kathodenbereichs, an welchem die Kathodenlasche montiert ist, bereitgestellt ist, und wobei
Isolierbänder in einer Region, in welcher der unbeschichtete Bereich der Grenzfläche des beschichteten Kathodenbereichs und der Bereich mit anodenaktiver Materialbeschichtung über einen Separator miteinander in Kontakt gebracht werden, und einer Region, in welcher die Anodenlasche und die Kathodenlasche mit Elektrodenstromkollektoren mit unterschiedlichen Polaritäten über den Separator in Kontakt gebracht werden, bereitgestellt sind, um dadurch doppelte Isolierung zusammen mit dem Separator zu erzielen.

7. Sekundäre Batterie, umfassend die Wicklung nach Anspruch 1 oder 2.

8. Sekundäre Batterie nach Anspruch 7, wobei die Wicklung in einem prismatischen oder beutelförmigen Batteriegehäuse montiert ist.

9. Sekundäre Batterie nach Anspruch 7, wobei der vorbestimmte Winkel 30 bis 90 Grad beträgt.

## Revendications

1. Ensemble électrode de type rouleau de gel (« rouleau de gel ») configuré par l'enroulement d'une cathode présentant une partie revêtue de matériau actif de cathode formée sur au moins un côté d'un collecteur de courant de cathode et d'une anode présentant une partie revêtue de matériau actif d'anode formée sur au moins un côté d'un collecteur de courant d'anode dans un état dans lequel la cathode et l'anode sont opposées l'une à l'autre via un séparateur, dans lequel
une languette de cathode montée sur une partie non revêtue de la cathode de telle sorte que la languette de cathode est inclinée vers le haut selon un angle prédéterminé par rapport à une direction longitudinale de la cathode et une languette d'anode montée sur une partie non revêtue de l'anode de telle sorte que la languette d'anode est inclinée vers le haut selon un angle prédéterminé par rapport à une direction longitudinale de l'anode sont situées de sorte à être adjacentes l'une à l'autre pour minimiser un champ magnétique généré par le courant de cathode et le courant d'anode lors de la décharge, et
la languette de cathode et la languette d'anode sont situées à l'extrémité extérieure du rouleau de gel après enroulement, dans lequel une distance entre la languette de cathode et la languette d'anode, de manière spécifique la distance entre des bords voisins de la languette de cathode et de la languette d'anode, est (la largeur de la languette d'anode + la largeur de la languette de cathode) x 130 %, et dans lequel le séparateur est situé sur la partie non revêtue de l'anode et le séparateur s'étend de sorte à être plus long que la partie d'extrémité de l'anode.

2. Ensemble électrode de type rouleau de gel (« rouleau de gel ») configuré par enroulement d'une cathode présentant une partie revêtue de matériau actif de cathode formée sur au moins un côté d'un collecteur de courant de cathode et d'une anode présentant une partie revêtue de matériau actif d'anode formée sur au moins un côté d'un collecteur de courant d'anode dans un état dans lequel la cathode et l'anode sont opposées l'une à l'autre via un séparateur, dans lequel
une languette de cathode montée sur une partie non revêtue de la cathode de telle sorte que la languette de cathode est inclinée vers le haut selon un angle prédéterminé par rapport à une direction longitudinale de la cathode et une languette d'anode montée sur une partie non revêtue de l'anode de telle sorte que la languette d'anode est inclinée vers le haut selon un angle prédéterminé par rapport à une direction longitudinale de l'anode sont situées de sorte à être adjacentes l'une à l'autre pour minimiser un champ magnétique généré par le courant de cathode et le courant d'anode lors de la décharge, et
la languette de cathode et la languette d'anode sont situées à l'extrémité intérieure du rouleau de gel après enroulement, dans lequel une distance entre la languette de cathode et la languette d'anode, de manière spécifique la distance entre des bords voisins de la languette de cathode et de la languette d'anode, est (la largeur de la languette d'anode + la largeur de la languette de cathode) x 130 %, et dans lequel le séparateur est situé sur la partie non revêtue de l'anode et le séparateur s'étend de sorte à être plus long que la partie d'extrémité de l'anode.

3. Rouleau de gel selon la revendication 1, dans lequel
une partie de début d'enroulement de la cathode présente des parties revêtues de matériau actif de cathode formées sur les côtés supérieur et inférieur du collecteur de courant de cathode et ainsi, ne présente pas une partie non revêtue de cathode, et une partie d'extrémité d'enroulement de la cathode est pourvue d'une partie non revêtue de cathode sur laquelle est montée la languette de cathode, et dans lequel
un ruban isolant est prévu sur une surface de séparation de la partie revêtue de matériau actif de cathode située sur la partie d'extrémité d'enroulement de la cathode de telle sorte que la surface de séparation est opposée à l'anode.

4. Rouleau de gel selon la revendication 1, dans lequel
une partie de début d'enroulement de la cathode présente des parties revêtues de matériau actif de cathode formées sur les côtés supérieur et inférieur du collecteur de courant de cathode et ainsi, ne présente pas une partie non revêtue de cathode, et une partie d'extrémité d'enroulement de la cathode est pourvue d'une partie non revêtue de cathode sur laquelle est montée la languette de cathode, et dans lequel
une partie revêtue de matériau actif de cathode est en outre formée sur au moins un côté de l'extrémité arrière de la partie non revêtue de cathode, et un ruban isolant est prévu sur une surface de séparation de la partie revêtue de matériau actif de cathode située sur la partie d'extrémité d'enroulement de la cathode de telle sorte que la surface de séparation est opposée à l'anode.

5. Rouleau de gel selon la revendication 2, dans lequel
une partie de début d'enroulement et une partie de fin d'enroulement de la cathode présentent des parties non revêtues de cathode, la languette de cathode est montée sur la partie non revêtue de cathode intérieure de la partie de début d'enroulement, et un ruban isolant est prévu sur l'extrémité arrière de la partie non revêtue de cathode sur laquelle est montée la languette de cathode, et dans lequel
un ruban isolant est prévu sur une surface de séparation de la partie revêtue de matériau actif de cathode située sur la partie d'extrémité d'enroulement de la cathode de telle sorte que la surface de séparation est opposée à l'anode.

6. Rouleau de gel selon la revendication 2, dans lequel
une partie de début d'enroulement et une partie de fin d'enroulement de la cathode présentent des parties non revêtues de cathode, la languette de cathode est montée sur la partie non revêtue de cathode intérieure de la partie de début d'enroulement, et un ruban isolant est prévu sur l'extrémité arrière de la partie non revêtue de cathode sur laquelle est montée la languette de cathode, et dans lequel
des rubans isolants sont prévus sur une région au niveau de laquelle la partie non revêtue de la surface de séparation de la partie revêtue de cathode et la partie revêtue de matériau actif d'anode sont mises en contact l'une avec l'autre via un séparateur et une région au niveau de laquelle la languette d'anode et la languette de cathode sont mises en contact avec des collecteurs de courant d'électrode présentant différentes polarités via le séparateur, pour accomplir ainsi une double isolation conjointement avec le séparateur.

7. Batterie secondaire comprenant le rouleau de gel selon la revendication 1 ou 2.

8. Batterie secondaire selon la revendication 7, dans laquelle le rouleau de gel est monté dans un boîtier de batterie prismatique ou en forme de pochette.

9. Batterie secondaire selon la revendication 7, dans laquelle l'angle prédéterminé est de 30 à 90 degrés.
